# EUROPEAN PATENT SPECIFICATION

(11) **EP 3 191 616 B1**
(45) Date of publication and mention of the grant of the patent: **04.11.2020**
(21) Application number: 15756919.5
(22) Date of filing: 01.09.2015
(51) Int. Cl.: C23C 22/34, C23C 22/83, C25D 5/48, C23C 28/00, F16L 58/04, F16L 58/18, F16L 58/08

(54) **METAL CONNECTOR OR ADAPTOR FOR HYDRAULIC OR OIL DYNAMIC APPLICATION AT HIGH PRESSURE AND RELATIVE GALVANIC TREATMENT FOR CORROSION PROTECTION**
METALLVERBINDER ODER -ADAPTER ZUR HYDRAULISCHEN ODER ÖLDYNAMISCHEN ANWENDUNG BEI HOHEM DRUCK UND ZUGEHÖRIGE GALVANISCHE BEHANDLUNG ZUM KORROSIONSSCHUTZ
CONNECTEUR OU ADAPTATEUR MÉTALLIQUE POUR UNE APPLICATION DYNAMIQUE HYDRAULIQUE OU À HUILE À HAUTE PRESSION ET UN TRAITEMENT GALVANIQUE ASSOCIÉ POUR RÉALISER UNE PROTECTION CONTRE LA CORROSION

(30) Priority: 08.09.2014 IT MI20141551
(43) Date of publication of application: 19.07.2017
(73) Proprietor: Alfa Gomma S.p.A., 20871 Vimercate (Monza Brianza) (IT)
(72) Inventor: GENNASIO, Enrico, 20871 Vimercate (Monza Brianza) (IT); MAZZOLI, Stefano, 20883 Mezzago (Monza Brianza) (IT); DOI, Rinaldo, 26833 Merlino (Lodi) (IT)
(74) Representative: Rapisardi, Mariacristina
(86) International application number: PCT/EP2015/069913
(87) International publication number: WO 2016/037892

(56) References cited:
- EP-A1- 1 712 659
- DE-A1-102008 032 772
- US-A1- 2007 243 397

## Description

The present invention relates to a metal connector or adaptor for hydraulic or oil dynamic application at high pressure and to the relative galvanic treatment for corrosion protection.

As is known in the sector of metal hydraulic and oil dynamic connectors and adaptors applications at high pressure, there is a strongly felt need to create suitable protection from galvanic corrosion.

The solutions most commonly adopted in the past include electrolytic zinc plating with hexavalent chromium passivation.

Although the performances of the plating thus obtained are completely suitable, a health and safety problem has emerged connected with the use of hexavalent chromium, leading to the need to look for just as effective alternatives.

In particular, hexavalent chromium compounds are very toxic and it is suspected that they are teratogenic.

On that point, it must be remembered that many hexavalent chromium compounds are classified as carcinogenic for almost all living organisms including, obviously, human beings.

Such connectors and adaptors commonly found on the market also entail the drawback of not being immediately identifiable in relation to their galvanic corrosion resistance properties, since they all have the same appearance even if they come from different manufacturers.

DE102008032772 A1 discloses a metal connector or adaptor for hydraulic or oil dynamic application at high pressure according to the preamble of claim 1. US-A-2007 243 339 discloses passivation solutions based on chromium (III), which may contain a silicon compound and an azo dye.

The technical task set by the present invention is, therefore, to provide a metal connector or adaptor for hydraulic or oil dynamic application at high pressure and a relative galvanic treatment for corrosion protection that allows the drawbacks entailed in the prior art to be overcome.

Within the scope of this technical task, an aim of the invention is to provide, in the field of metal connectors and adaptors for hydraulic or oil dynamic application at high pressure, high resistance protection of the pieces against corrosion without health and safety risks deriving from the production process or the handling of the pieces produced.

Another object of the invention is to provide metal hydraulic and oil dynamic connectors and adaptors for application at high pressure that are immediately identifiable in relation to their specific galvanic corrosion resistance properties. The technical task, as well as this and other objects, according to the present invention are reached by providing a metal connector or adaptor for hydraulic or oil dynamic application at high pressure, comprising electrolytic passivated zinc plating free from hexavalent chromium, characterised in that said zinc plating comprises an external trivalent chromium passivation layer sealed with at least one silicon compound, said passivation layer having a coloration immediately identifiable in relation to their specific galvanic corrosion resistance properties.

The present invention also discloses a galvanic treatment for the corrosion protection of metal connectors and/or adaptors for hydraulic or oil dynamic application at high pressure,characterised in that it comprises in sequence at least one electrolytic zinc plating step, at least one rinsing step and at least one passivation step in an electrolytic passivation solution comprising trivalent chromium, a dye in turn comprising at least one azo complex of chromium, and at least one silicon sealant.

Other characteristics of the present invention are further defined in the claims hereinbelow.

Further characteristics and advantages of the invention will become more apparent from the following description of a preferred but not exclusive embodiment of the galvanic treatment according to the invention.

The galvanic treatment for the corrosion protection of metal connectors and/or adaptors for hydraulic or oil dynamic application at high pressure, comprises in sequence at least one electrolytic zinc plating step, at least one rinsing step and at least one passivation step in an electrolytic passivation solution comprising trivalent chromium, a dye in turn comprising at least one azo complex of chromium, and at least one silicon sealant.

The passivation step is performed with the electrolytic solution having a temperature comprised between 20 and 40°C, a pH comprised between 1.4 and 3.4, immersion time of pieces comprised between 25 and 120 seconds, and the pieces to be treated subject to mechanical agitation.

Preferably the passivation step is performed with the electrolytic solution having a temperature of 30°C, a pH comprised between 2.0 and 2.5 and an immersion time of pieces of 60 seconds.

Preferably the pH is regulated with a 50% nitric acid solution.

After the passivation step a sealing step is envisaged in an electrolytic solution based on zinc chromate.

After the sealing step a hot drying step is envisaged.

The metal connector or adaptor for hydraulic or oil dynamic application at high pressure that is obtained with this galvanic treatment has an electrolytic passivated zinc plating free from hexavalent chromium, comprising an external trivalent chromium passivation layer sealed with at least one silicon compound.

The passivation layer has a coloration immediately identifiable in relation to its specific galvanic corrosion resistance properties.

In particular the coloration is slightly iridescent grey - violet.

The passivation layer comprises an azo complex of chromium that gives it this unique coloration.

Advantageously the passivation layer is covered in a further zinc chromate sealing layer.

An example of a galvanic treatment in compliance with the invention is reported below.

The metal pieces, in particular ferrous, are first prepared for the zinc plating.

The piece preparation step envisages degreasing with solvents (trieline or perchloroethylene), or hot degreasing with alkaline solutions. This is followed by a wash in hot and cold water. Subsequently, pickling in a 75% volume hydrochloric acid solution at room temperature in a tank coated in Vipla or hard rubber, then washing in running water, then hot pre-degreasing in alkaline solutions, then cathodic and anodic electrolytic degreasing, or only anodic, then washing in running water, then neutralisation in 25% volume hydrochloric acid solution, then washing in running water, then neutralisation in 5-10% sodium cyanide solution, at room temperature. The tank may be made of iron, bare, or coated in Vipla.

This is followed by the electrolytic zinc plating of the metal pieces. The zinc plating is performed with a zinc plating bath commercially known as Cromozink or Olozink.

In general the electrolytic zinc plating consists of placing the items to be zinc plated (well cleaned with mechanical brushing or washing in alkaline solutions for degreasing and then acid solutions for pickling them) as a cathode in an electrolytic bath. The items to be zinc plated are placed on suitable frames and then immersed in the zinc plating bath. Some metal bars of the metal to be deposited, connected to the anode, and soluble metal salts to be deposited are immersed in the same bath (respecting some geometric principles). When the current is supplied the positive ions of the metal to be deposited migrate towards the negative pole, where they are discharged becoming deposited in the form of a continuous metal layer. Instead, at the positive pole, the metal is dissolved with the formation of ions in solution, which reintegrate the ions discharged at the cathode. The overall reaction is a redox reaction, as a result of the anodic oxidation of the metal which dissolves loosing electrons and the cathodic reduction of the ions deposited as a metal gaining electrons. Two important zinc plating groups can be distinguished according to the chemical composition of the zing plating baths. Zinc forms many soluble salts and, under certain conditions, can be electrodeposited from acid solutions (to sulphate, fluoborate, chloride, sulphamate, etc.) and from alkaline solutions (to cyanide, pyrosulphate, zincate, ethanolamine, etc.). According to the production requirements and the zinc plating type, automatic program systems can be provided for various processes. It is important to obtain pure zinc deposits, since the presence therein of extraneous metals (nickel, lead, tin and copper) may greatly accelerate atmospheric corrosion. From this point of view acidic sulphate solutions are preferable to cyanide ones, since there is a lower tendency for metal impurities to pass from the anodes to the deposits in sulphate baths compared to cyanide ones - in the latter of which the potentials to discharge many of the extraneous metals are very close. It follows that it is more important in zinc plating to use pure zinc anodes in cyanide baths than in sulphate ones. The reason why zinc, not a very noble metal, separates well from acidic solutions with very high current efficiencies, is that hydrogen on zinc has a very high overvoltage. However, to prevent the simultaneous separation of hydrogen with zinc, there must be no impurities in the bath, which would lower the overvoltage, or no carbon or graphite particles on the surface of the cathode. Cyanalkaline baths have the disadvantage of a lower current efficiency and above all dependent on the electrodeposition conditions. As well as the current efficiency, the solubility of the anodes is also usually better in acidic solutions than in alkaline ones. Furthermore, acidic baths have higher conductivity, which leads to reductions in electrical energy consumption.

After the electrolytic zinc plating, which provides corrosion resistance, the pieces are washed in running water and a pre-passivation is performed in nitric acid (0.25 - 0.5 % vol.), and then rinsing.

Hence the passivation is performed using the following operating parameters.

**OPERATING PARAMETERS OF THE WORK SOLUTION**

| | Range | Optimal |
|---|---|---|
| Component A of the work solution | 80 - 120 cc/l | 100 cc/l |
| Component B of the work solution | 80 - 120 cc/l | 100 cc/l |
| Temperature | 20 - 40°C | 30°C |
| Immersion time | 45" - 120" | 60" |
| pH | 1,4-3,4 | 2,0 - 2,5 |
| Tanks | polypropylene, coated steel | |
| Movement | necessary, mechanical or with insufflated air, in plating barrels slow, intermittent rotation is recommended | |
| Heating | recommended, with Teflon or pyrex | |

The immersion times may vary according to the concentration and aging status of the work solution.

The concentration of the work solution must be maintained through regular additions of components A and B, in a 1:1 ratio.

To regulate the pH of the work tank, a 50% nitric acid solution is used, and a calibrated pH meter to control the values.

To ensure the correct supply, the work solution is periodically titrated. Component A comprises a solution based on:
- cobalt salt <10%
- organic acids <10%
- ammonium bifluoride <5%
- trivalent chromium 30%
- dye in the form of a chromium azo complex
- sealant in the form of silicon compounds

Component B is a solution based on chromium compounds commercially known as Spectramate 25.

Passivation with such a work solution therefore represents a process based on trivalent chromium formulated to fulfil the requirement for deposits with high corrosion resistance. It enables a thick conversion layer to be obtained with self-healing properties similar to those obtained with hexavalent chromium passivations and, above all, a slightly iridescent grey-violet finish is produced, a unique colour among high corrosion resistance processes. This work solution enables work to be performed with great operating flexibility, at very wide pH and temperature ranges (also at room temperature, eliminating heating costs), and is ideal for acid zinc or cyanide-free zinc static or barrel plating systems.

After passivation the pieces are rinsed to be prepared for the subsequent sealing step which is performed through immersion in a bath of a solution commercially known as Zinc-Chro-Shield.

The last operation after sealing consists of hot drying (60°C).

The galvanic treatment method as conceived herein is susceptible to many modifications and variations, all falling within the scope of the invention as defined in the claims; furthermore, all the details are replaceable by technically equivalent elements.

The materials used, as well as the dimensions, may in practice be of any type, according to needs and the state of the art.

## Claims

1. A metal connector or adaptor for hydraulic or oil dynamic application at high pressure, comprising electrolytic passivated zinc plating free from hexavalent chromium, **characterised in that** said zinc plating comprises an external trivalent chromium passivation layer sealed with at least one silicon compound, said passivation layer having a coloration immediately identifiable in relation to their specific galvanic corrosion resistance properties.

2. The metal connector or adaptor for hydraulic or oil dynamic application at high pressure according to the preceding claim, **characterised in that** said coloration is slightly iridescent grey - violet.

3. The metal connector or adaptor for hydraulic or oil dynamic application at high pressure according to any one of the preceding claims, **characterised in that** said passivation layer comprises an azo complex of chromium that gives it said coloration.

4. The metal connector or adaptor for hydraulic or oil dynamic application at high pressure according to any one of the preceding claims, **characterised in that** said passivation layer is covered in a further zinc chromate sealing layer.

5. Galvanic treatment for the corrosion protection of metal connectors and/or adaptors for hydraulic or oil dynamic application at high pressure, **characterised in that** it comprises in sequence at least one electrolytic zinc plating step, at least one rinsing step and at least one passivation step in an electrolytic passivation solution comprising trivalent chromium, a dye in turn comprising at least one azo complex of chromium, and at least one silicon sealant.

6. The galvanic treatment for the corrosion protection of metal connectors and/or adaptors for hydraulic or oil dynamic application at high pressure according to the preceding claim, **characterised in that** said passivation step is performed with said electrolytic solution having a temperature comprised between 20 and 40°C, a pH comprised between 1.4 and 3.4, an immersion time of pieces comprised between 25 and 120 seconds, and the pieces to be treated subject to mechanical agitation.

7. The galvanic treatment for the corrosion protection of metal connectors and/or adaptors for hydraulic or oil dynamic application at high pressure according to the preceding claim, **characterised in that** said passivation step is performed with said electrolytic solution having a temperature of 30°C, a pH comprised between 2.0 and 2.5 and an immersion time of pieces of 60 seconds.

8. The galvanic treatment for the corrosion protection of metal connectors and/or adaptors for hydraulic or oil dynamic application according to any one of claims 6 and 7, **characterised in that** after said passivation step it comprises a sealing step in an electrolytic solution based on zinc chromate.

9. The galvanic treatment for the corrosion protection of metal connectors and/or adaptors for hydraulic or oil dynamic application at high pressure according to the preceding claim, **characterised in that** after said sealing step it comprises a hot drying step.

10. The galvanic treatment for the corrosion protection of metal connectors and/or adaptors for hydraulic or oil dynamic application at high pressure according to any one of claims from 6 to 9, **characterised in that** the pH is regulated with a 50% nitric acid solution.

## Patentansprüche

1. Metallverbinder oder -adapter zur hydraulischen oder öldynamischen Anwendung bei hohem Druck, umfassend eine elektrolytisch passivierte Verzinkung, die frei von sechswertigem Chrom ist, **dadurch gekennzeichnet, dass** die Verzinkung eine externe dreiwertige Chrompassivierungsschicht umfasst, die mit mindestens einer Siliziumverbindung versiegelt ist, wobei die Passivierungsschicht eine Färbung aufweist, die in Bezug auf ihre spezifischen galvanischen Korrosionsbeständigkeitseigenschaften sofort erkennbar ist.

2. Metallverbinder oder -adapter zur hydraulischen oder öldynamischen Anwendung bei hohem Druck nach dem vorhergehenden Anspruch, **dadurch gekennzeichnet, dass** die Färbung leicht schillernd grau - violett ist.

3. Metallverbinder oder -adapter zur hydraulischen oder öldynamischen Anwendung bei hohem Druck nach einem der vorhergehenden Ansprüche, **dadurch gekennzeichnet ist, dass** die Passivierungsschicht einen Azokomplex aus Chrom umfasst, der ihm die Färbung verleiht.

4. Metallverbinder oder -adapter zur hydraulischen oder öldynamischen Anwendung bei hohem Druck nach einem der vorhergehenden Ansprüche, **dadurch gekennzeichnet, dass** die Passivierungsschicht mit einer weiteren Zinkchromat-Versiegelungsschicht bedeckt ist.

5. Galvanische Behandlung zum Korrosionsschutz von Metallverbindern oder -adaptern zur hydraulischen oder öldynamischen Anwendung bei hohem Druck, **dadurch gekennzeichnet, dass** sie nacheinander mindestens einen elektrolytischen Verzinkungsschritt, mindestens einen Spülschritt und mindestens einen Passivierungsschritt in einer elektrolytische Passivierungslösung umfassend dreiwertiges Chrom, einen Farbstoff, der wiederum mindestens einen Azokomplex aus Chrom umfasst, und mindestens ein Siliziumversiegelungsmittel umfasst.

6. Galvanische Behandlung zum Korrosionsschutz von Metallverbindern oder -adaptern zur hydraulischen oder öldynamischen Anwendung bei hohem Druck nach dem vorhergehenden Anspruch, **dadurch gekennzeichnet, dass** der Passivierungsschritt mit der Elektrolytlösung aufweisend eine Temperatur zwischen 20 und 40 °C, einen pH-Wert zwischen 1,4 und 3,4, eine Eintauchzeit von Stücken zwischen 25 und 120 Sekunden und die zu behandelnden Stücke unter mechanischem Rühren durchgeführt wird.

7. Galvanische Behandlung zum Korrosionsschutz von Metallverbindern oder -adaptern zur hydraulischen oder öldynamischen Anwendung bei hohem Druck nach dem vorhergehenden Anspruch, **dadurch gekennzeichnet, dass** der Passivierungsschritt mit der Elektrolytlösung aufweisend eine Temperatur von 30 °C, einen pH-Wert zwischen 2,0 und 2,5 und eine Eintauchzeit der Stücke von 60 Sekunden durchgeführt wird.

8. Galvanische Behandlung zum Korrosionsschutz von Metallverbindern oder -adaptern zur hydraulischen oder öldynamischen Anwendung bei hohem Druck nach einem der Ansprüche 6 und 7, **dadurch gekennzeichnet, dass** sie nach dem Passivierungsschritt einen Versiegelungsschritt in einer Elektrolytlösung auf Zinkchromatbasis umfasst.

9. Galvanische Behandlung zum Korrosionsschutz von Metallverbindern oder -adaptern zur hydraulischen oder öldynamischen Anwendung bei hohem Druck nach dem vorhergehenden Anspruch, **dadurch gekennzeichnet, dass** sie nach dem Versiegelungsschritt einen Heißtrocknungsschritt umfasst.

10. Galvanische Behandlung zum Korrosionsschutz von Metallverbindern oder -adaptern zur hydraulischen oder öldynamischen Anwendung bei hohem Druck nach einem der Ansprüche 6 bis 9, **dadurch gekennzeichnet, dass** der pH-Wert mit einer 50%igen Salpetersäurelösung geregelt wird.

## Revendications

1. Connecteur ou adaptateur métallique pour une application hydraulique ou oléodynamique à haute pression, comprenant un zingage électrolytique passivé sans chrome hexavalent, **caractérisé en ce que** ledit zingage comprend une couche de passivation externe de chrome trivalent étanchéisée avec au moins un composé de silicium, ladite couche de passivation ayant une coloration immédiatement identifiable en fonction de leurs propriétés spécifiques de résistance à la corrosion galvanique.

2. Connecteur ou adaptateur métallique pour une application hydraulique ou oléodynamique à haute pression selon la revendication précédente, **caractérisé en ce que** ladite coloration est légèrement irisée gris violet.

3. Connecteur ou adaptateur métallique pour une application hydraulique ou oléodynamique à haute pression selon l'une quelconque des revendications précédentes, **caractérisé en ce que** ladite couche de passivation comprend un complexe azoïque de chrome lui donnant ladite coloration.

4. Connecteur ou adaptateur métallique pour une application hydraulique ou oléodynamique à haute pression selon l'une quelconque des revendications précédentes, **caractérisé en ce que** ladite couche de passivation est recouverte d'une autre couche étanche au chromate de zinc.

5. Traitement galvanique pour réaliser une protection contre la corrosion de connecteurs et/ou d'adaptateurs métalliques pour une application hydraulique ou oléodynamique à haute pression, **caractérisé en ce qu'**il comprend en séquence au moins une étape de zingage électrolytique, au moins une étape de rinçage et au moins une étape de passivation dans une solution de passivation électrolytique comprenant du chrome trivalent, un colorant comprenant à son tour au moins un complexe azoïque de chrome, et au moins un matériau d'étanchéité au silicium.

6. Traitement galvanique pour réaliser une protection contre la corrosion de connecteurs et/ou d'adaptateurs métalliques pour une application hydraulique ou oléodynamique à haute pression selon la revendication précédente, **caractérisé en ce que** ladite étape de passivation est effectuée avec ladite solution électrolytique ayant une température comprise entre 20 et 40 °C, un pH compris entre 1,4 et 3,4, une durée d'immersion des pièces comprise entre 25 et 120 secondes et les pièces à traiter étant soumises à une agitation mécanique.

7. Traitement galvanique pour réaliser une protection contre de connecteurs et/ou d'adaptateurs métalliques pour une application hydraulique ou oléodynamique à haute pression selon la revendication précédente, **caractérisé en ce que** ladite étape de passivation est effectuée avec ladite solution électrolytique ayant une température de 30 °C, un pH compris entre 2,0 et 2,5 et une durée d'immersion des pièces de 60 secondes.

8. Traitement galvanique pour réaliser une protection contre la corrosion de connecteurs et/ou d'adaptateurs métalliques pour une application hydraulique ou oléodynamique selon l'une quelconque des revendications 6 et 7, **caractérisé en ce que**, après ladite étape de passivation, il comprend une étape d'étanchéisation dans une solution électrolytique à base de chromate de zinc.

9. Traitement galvanique pour réaliser une protection contre la corrosion de connecteurs et/ou d'adaptateurs métalliques pour une application hydraulique ou oléodynamique à haute pression selon la revendication précédente, **caractérisé en ce qu'**après ladite étape d'étanchéisation, il comprend une étape de séchage à chaud.

10. Traitement galvanique pour réaliser une protection contre la corrosion des connecteurs et/ou adaptateurs métalliques pour une application hydraulique ou oléodynamique à haute pression selon l'une quelconque des revendications de 6 à 9, **caractérisé en ce que** le pH est régulé par une solution d'acide nitrique à 50 %.
